(19) Europäisches Patentamt
European Patent Office
Office européen des brevets

(11) **EP 2 424 025 A2**

(12) **EUROPÄISCHE PATENTANMELDUNG**

(43) Veröffentlichungstag:
**29.02.2012 Patentblatt 2012/09**

(51) Int Cl.:
*H01M 8/10* (2006.01)    *H01M 4/88* (2006.01)

(21) Anmeldenummer: **11006486.2**

(22) Anmeldetag: **08.08.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **31.08.2010 DE 102010035949**

(71) Anmelder: **Forschungszentrum Jülich Gmbh
52425 Jülich (DE)**

(72) Erfinder:
- **Müller, Martin
  53489 Sinzig (DE)**
- **Kimiaie, Nicola
  50171 Kerpen (DE)**
- **Schulze Lohoff, Andreas
  52066 Aachen (DE)**
- **Trappmann, Christian
  52062 Aachen (DE)**

(54) **Verfahren und Vorrichtung zur Herstellung von Membran-Elektroden-Einheiten für Brennstoffzellen**

(57)    Die Erfindung betrifft ein Verfahren zur Herstellung von Membran-Elektroden-Einheiten (MEA) für Brennstoffzellen sowie entsprechende Vorrichtungen zur Durchführung des Verfahrens. Die Erfindung basiert auf der Idee, dass der hohe elektrische Widerstand des Materials wenigstens in einer der verwendeten Schichten vorteilhaft als Heizwiderstand genutzt werden kann, um die zum Verbinden notwendige Temperatur direkt innerhalb dieser Schicht einzustellen. Das Aufheizen der Schicht erfolgt durch einen direkt eingekoppelten Stromfluss, der entweder über eine elektrische Kontaktierung der Schicht oder induktiv eingekoppelt wird. Das Verfahren kann kontinuierlich oder auch diskontinuierlich betrieben werden.

Bei den entsprechenden Vorrichtungen zur Herstellung von Membran-Elektroden-Einheiten nach diesem erfindungsgemäßen Verfahren sind elektrische Kontakte oder eine Induktionsspule innerhalb einer Pressplatte oder Presswalze vorgesehen, die eine direkte Beheizung der Gasdiffusions- oder Gasdiffusionselektrodenschicht vor dem Verpressen mit einem Träger zu einer Membran-Elektrodeneinheit ermöglichen.

EP 2 424 025 A2

**Beschreibung**

Die Erfindung betrifft ein Verfahren zur Herstellung von Membran-Elektroden-Einheiten (MEA) für Brennstoffzellen sowie dazu geeignete Vorrichtungen.

Stand der Technik

Die Membran-Elektroden-Einheit einer Brennstoffzelle besteht in der Regel aus der Membran, den Katalysatorschichten und den Diffusionsschichten. Die Diffusionsschicht leitet die Brennstoffe zur Katalysatorschicht hin, bzw. die Verbrennungsprodukte ab. Sie muss zudem elektrisch leitfähig und mechanisch stabil sein. In den Katalysatorschichten findet die elektrochemische Reaktion statt, hierbei wird chemische Energie in elektrische Energie umgewandelt.

Im Fall der Direktmethanolbrennstoffzellen mit einer Polymerelektrolytmembran (PEM-BZ) wird am anodenseitigen Katalysator ein Methanolwassergemisch oxidiert und dabei in Kohlendioxid ($CO_2$) und Protonen zerlegt. Durch die anodenseitige Diffusionsschicht werden einerseits Methanol und Wasser zugeführt, andererseits werden Elektronen und $CO_2$ aus der Reaktionszone abtransportiert. Der Fluss der Elektronen von der Anode zur Kathode erfolgt über einen äußeren Stromkreis. Dort kann die elektrische Energie zum Beispiel in einem Elektromotor genutzt werden. Gleichzeitig wandern die in der Anode verbliebenen Protonen auf Grund der Potenzialdifferenz durch die Protonen leitende Membran zur Kathode. Protonen und Elektronen werden am kathodenseitigen Katalysator mit dem Luftsauerstoff zu Wasser umgesetzt. Die Reaktionsedukte (-produkte) werden durch die kathodische Diffusionsschicht an (ab) transportiert.

Der typische Aufbau einer Membran-Elektroden-Einheit sieht wie folgt aus. Auf ein Gasdiffusionssubstrat wird eine Kohlegrundschicht (engl. Carbon base layer) aus PTFEgebundenem Russ aufgetragen. Auf dieser Gasdiffusionsschicht (GDL, engl. Gas Diffusion Layer) ist die Katalysatorschicht angeordnet, beispielsweise aus Kohle geträgertem Platin. Daran schließt sich die Membran an.

Das Träger- oder Gasdiffusionssubstrat besteht in der Regel aus einem sehr dünnen Kohlenstoffpapier, karbonisiertem Vlies oder Fasergewebe mit einer Schichtdicke unterhalb von 500 $\mu$m, welche je nach Elektrodenseite mehr oder weniger stark hydrophobisiert wurde. Die Katalysatorschicht besteht je nach Elektrode aus 0,1 bis 4 mg/cm$^2$ nanodispersem Platin (Kathode), bzw. Platin-Ruthenium für die Anode, auf graphitisierten Russpartikeln. Der Katalysator wird üblicherweise zusammen mit einem Binder (Nafion®, PTFE-Emulsion oder Polyvinylalkohol) aufgebracht. Sofern die Katalysatorschicht bereits mit der Gasdiffusionsschicht kombiniert wird, spricht man von einer Gasdiffusionselektrode (GDE, engl. Gas Diffusion Electrode).

Die Ionen leitende Membran wird üblicherweise in einem Heisspressschritt (Temperatur bis 160 °C, Druck 16 bar, 5 bis 10 Minuten) mit der Katalysatorschicht und der Gasdiffusionsschicht zur Membran-Elektroden-Einheit verpresst. Aus WO/2006/008075 ist beispielsweise bekannt, dass dazu bevorzugt Presstemperaturen im Bereich von 40 bis 220 °C, insbesondere 60 bis 200 °C, je nach den verwendeten Materialien eingestellt werden. Die erhöhten Temperaturen können dazu über beheizte Pressplatten eingestellt werden.

Sofern die Ionen leitende Membran bereits in der protonierten Form vorliegt, können auch Bedingungen wie 130 °C und ein Anpressdruck von ca. 50 bar für 3 Minuten ausreichen.

Zur Herstellung von Membran-Elektroden-Einheiten gibt es unterschiedliche Verfahren. Eine Vielzahl von Verfahren wird im Labormaßstab eingesetzt, um kleine Stückzahlen zu ermöglichen, oder ist nur für spezielle Anwendungen konzipiert. Für eine kostengünstige Massenproduktion haben sich primär Prozesse aus der Druckindustrie durchgesetzt, welche an die für Brennstoffzellenmaterialien spezifischen Anforderungen angepasst wurden.

Bei den Industrieprozessen wird in der Regel der Katalysator zusammen mit flüssigem Elektrolyt zu einer Art Tinte oder Emulsion angerührt und anschließend feucht appliziert. Diese Verfahren werden als "Nassverfahren" bezeichnet. Dabei handelt es sich im Wesentlichen um Rakelverfahren, mit deren Hilfe eine Substratbahn beispielsweise mit einer Diffusions- oder Katalysatorschicht kontinuierlich beschichtet werden kann. Weitere Nassverfahren sind Streich- und Siebdruckverfahren bei denen eine hochviskose Emulsion auf einen Träger oder direkt auf die Gasdiffusionsschichten (GDL) gerakelt oder gedruckt wird. Verfahrensbedingt können hierbei in der Regel nur Elektroden mit einer Schichtdicke von mehr als 20 $\mu$m aufgetragen werden. Um dünnere Elektroden herzustellen kommen Sprüh-Verfahren - ähnlich Airbrush Systemen - oder Tintenstrahldrucker zur Anwendung.

Daneben sind Verfahren zur Herstellung einer Funktionsschicht für eine Brennstoffzelle bekannt, bei denen das Elektrodenmaterial trocken und pulverförrnig aufgetragen wird, wie es beispielsweise der DE 197 57 492 zu entnehmen ist.

In DE 101 12 232 A1 wird in einem kombinierten Verfahren zur Herstellung einer mehrschichtigen Elektrode oder Elektrodenverbundeinheit vorgeschlagen, eine erste Schicht (Trägerstruktur) über Walzen auf einen Träger aufzubringen, und eine zweite Schicht anschließend durch Aufsprühen eines insbesondere trockenen Pulvers zu erzeugen.

Allen Verfahren ist bislang gemeinsam, dass am Ende zur Fixierung der Elektroden das beschichtete Substrat im Fall der Polymerelektrolytmembran über der Haupterweichungstemperatur heiß verwalzt oder verpresst wird. Dies kann beispielsweise mit Hilfe eines Walzstuhls mit einer bis ca. 170 °C beheizbaren Walze oder einer Heißpresse realisiert werden. Um ein Anhaften des Substrats an der Walze zu verhindern, insbesondere wenn als Substrat die Membran verwendet wird, wird das Substrat in einer Edelstahltasche verwalzt und anschließend unter die Haupterweichungstemperatur abgekühlt. In einer später umgesetzten kontinuierlichen Produktion kann die Edelstahltasche durch umlaufende Bänder mit Abkühlzonen ersetzt werden. So ist beispielsweise aus DE 102 43 046 B4 eine Walze mit einem Wärmekontaktelement bekannt, welches bei und/oder nach dem Aufwalzen des Bearbeitungsmaterials auf einen Träger in Kontakt mit dem Werkstück steht, und so das Werkstück über das Wärmekontaktelement abkühlbar ist.

In der Regel werden neue Verfahren und Pastenrezepturen zunächst im Handversuch getestet, dann auf automatischen Laborbeschichtungsgeräten optimiert und schließlich in einer optimalen Beschichtungssequenz auf eine Beschichtungsmaschine übertragen.

Beim Heißverpressen von Membran-Elektroden-Einheiten werden Systeme eingesetzt, die Druck und Temperatur von extern der Membran-Elektroden-Einheit zuführen. Typischerweise handelt es sich dabei um beheizte Pressen, bei denen die Druckplatten auf die gewünschte Temperatur gebracht werden und über Wärmeleitung die Wärme in das Schichtsystem eingekoppelt wird. Solche Pressen weisen in der Regel ein aufwändiges Kühlsystem auf, damit die eingebrachte Wärme sich nicht auf die Presse überträgt und diese unzulässig erwärmt.

Der Nachteil der bisherigen Systeme liegt darin, dass lange Aufwärmzeiten benötigt werden, bis die Werkzeuge die gewünschte Temperatur aufweisen, bzw. wieder abgekühlt sind, so dass die Membran-Elektroden-Einheit entnommen werden kann. Diese Schwierigkeit kann durch die Nutzung mehrerer Pressen, die bei unterschiedlichen Temperaturen arbeiten, überwunden werden. Die Membran-Elektroden-Einheit wird dann zuerst der Heizpresse zugeführt und anschließend in einer Kühlpresse abgekühlt. Dabei ist es allerdings nicht möglich den Anpressdruck über alle Phasen der Herstellung auf der Membran-Elektroden-Einheit zu halten. Außerdem führt ein solches System zu hohen Investitionskosten, da mehrere Pressen aufgestellt werden müssen und ein passendes Beschickungssystem vorhanden sein muss.

Ein Verpressen von Membran-Elektroden-Einheiten unter Schutzgas oder feuchter Atmosphäre ist nur mit erheblichem Aufwand (Werkzeugentwicklung) möglich. Außerdem kann es passieren, dass die Presswerkzeuge sich unter der Einwirkung von Wärme deformieren und die Druckverteilung negativ beeinflusst wird.

<u>Aufgabe und Lösung</u>

Der Erfindung liegt die Aufgabe zugrunde, ein Verfahren zur Herstellung von Membran-Elektroden-Einheiten bereit zu stellen, welches die Nachteile aus dem bekannten Stand der Technik überwindet, und insbesondere ohne externe beheizte Pressen auskommt.

Weiterhin ist es die Aufgabe der Erfindung, eine Vorrichtung zur Durchführung des vorgenannten Verfahrens zur Verfügung zu stellen.

Die Aufgaben der Erfindung werden gelöst durch ein Verfahren gemäß Hauptanspruch sowie durch eine Vorrichtung zur Durchführung des Verfahrens gemäß Nebenanspruch. Vorteilhafte Ausgestaltungen des Verfahrens und der Vorrichtung finden sich in den jeweils darauf rückbezogenen Ansprüchen.

<u>Gegenstand der Erfindung</u>

Durch die Erfindung soll der Fügeprozess von Membran-Elektroden-Einheiten (MEA) für die Herstellung von Brennstoffzellen verbessert werden. Die Gasdiffusionsschicht bzw. die Gasdiffusionselektrode einer Brennstoffzelle sind in der Regel elektrisch leitfähig. Typische Leitfähigkeiten in dieser Schicht liegen bei 3 bis 7 S/mm. Die eingesetzten porösen graphitischen Werkstoffe weisen einen im Vergleich zu Metallen ca. um den Faktor 100 höheren Widerstand auf.

Die Erfindung basiert auf der Idee, dass dieser hohe elektrische Widerstand des Materials in wenigstens einer der verwendeten Schichten vorteilhaft als Heizwiderstand genutzt werden kann, um die zum Heißverpressen notwendige Temperatur einzustellen.

Erfindungsgemäß werden zunächst die Schichten der herzustellenden Membran-Elektroden-Einheiten auf einem Träger (Polymermembranschicht) entsprechend angeordnet, bzw. aufgebracht. Das Aufbringen kann dabei mit den bislang üblichen Methoden, wie beispielsweise Rakeln oder Sprühen, erfolgen.

Mithilfe eines in die elektrisch leitfähige Schicht eingekoppelten Stromflusses wird diese auf die gewünschte Temperatur aufgeheizt. Bei der Schicht kann es sich insbesondere um ein Substrat, eine Gasdiffusionsschicht, eine Katalysatorschicht oder eine kombinierte Gasdiffusionsschicht mit einer Katalysatorschicht (Gasdiffusionselektrode) handeln.

Als notwendige Temperatur für das herkömmliche Verbinden, d. h. Fixieren und Fügen von Polymerelektrolytbrennstoffzellen in Kombination mit Nafion® Membranen, wird 130 °C bis 135 °C angegeben. Die durch den erfindungsgemäß eingekoppelten Stromfluss erzielte Erwärmung sollte daher ebenfalls eine Temperaturdifferenz von wenigstens 100 °C, vorteilhaft sogar von bis zu 120 °C, in der Elektronen leitenden Schicht ermöglichen.

Das Einkoppeln eines Stromflusses kann im einfachsten Fall durch eine elektrische Kontaktierung der Schicht und Anlegen einer entsprechenden Spannung realisiert werden.

Als weitere alternative Ausgestaltung des Verfahrens ist aber auch eine Einkopplung über Induktion in die Schicht möglich. Das induktive Erwärmen ist ein Verfahren, einen elektrisch leitfähigen Körper durch in ihm erzeugte Wirbelstromverluste aufzuheizen. Dabei wird ein sich zeitlich ändernder magnetischer Fluss generiert, der seinerseits in der zu ihm benachbart angeordneten leitfähigen Schicht eine Spannung induziert. Die dazu benutzten Vorrichtungen sind so genannte Induktionsheizungen, die über eine von niederfrequentem Wechselstrom durchflossene Spule (dem Induktor) ein magnetisches Wechselfeld erzeugen, das in der aufzuheizenden Schicht Wirbelströme induziert.

Das erfindungsgemäße Verfahren ist dabei sowohl für den kontinuierlichen Herstellungsbetrieb, als auch bei der diskontinuierlichen Herstellung von Membran-Elektroden-Einheiten einsetzbar.

In einer besonders vorteilhaften Ausführung kann dabei vorgesehen werden, in einer kontinuierlichen Ausführung die aufzuheizende Schicht über zwei Walzen laufen zu lassen, die jeweils elektrisch kontaktiert sind, so dass über eine Elektronen leitende Schicht zwischen den Walzen der Stromkreis geschlossen werden kann. Die Kontaktierung der Walzen kann dabei beispielsweise über Schleifkontakte oder Kohlebürsten erfolgen. Besonders vorteilhaft ist eine Ausgestaltung, bei der lediglich die Oberfläche der Walzen elektrisch kontaktiert wird, so dass es nicht zu einer ungewollten Aufheizung der gesamten Walzen kommt. Die Kontaktierung der Walzen ist vorteilhaft in der Weise vorgesehen, dass in der Regel ein Elektronenfluss über die gesamte Breite der über die Walzen geführten Elektronen leitenden Schicht ermöglicht wird.

Es wird zudem davon ausgegangen, dass die Leitfähigkeit der Elektronen leitenden Schicht nahezu homogen ausgebildet ist. Somit werden sich bei einer linienförmigen Einkopplung der elektrischen Energie ein nahezu gleichmäßiger Stromfluss innerhalb der Elektronen leitenden Schicht und damit ein gleichmäßiges Temperaturprofil einstellen.

Die anzulegende Spannung bestimmt sich je nach der für die Verbindung benötigten Temperatur, nach der spezifischen Leitfähigkeit des Materials und der Geometrie der Schicht, d. h. insbesondere der Schichtdicke und der Breite der aufzuheizenden Schicht. Ferner ist neben der Vorschubgeschwindigkeit auch der Abstand der kontaktierten Walzen zu berücksichtigen.

Bei den konventionellen Herstellungsanlagen sind Vorschubgeschwindigkeiten von 0,1 m/min bis 1 m/min üblich. Je nach Anlage sind aber auch schon höhere Geschwindigkeiten denkbar, zum Beispiel 0,1 m/s.

In einer weiteren Ausgestaltung des Verfahrens kann das Einkoppeln eines Stromflusses aber auch induktiv erfolgen. Das bedeutet, die zum Erwärmen der Schicht notwendige Energie wird nicht durch eine elektrische Kontaktierung eingetragen, sondern durch ein von Induktionsspulen ausgehendes magnetisches Wechselfeld. Diese Ausgestaltung bietet sich insbesondere bei der diskontinuierlichen Herstellung einer Membran-Elektrodeneinheit an, da induktive Wechselfelder in der Regel kreisförmig ausgestaltet sind. Die Erfindung sieht dazu vor, dass ein sich zeitlich ändernder magnetischer Fluss vorteilhaft senkrecht zur Elektronen leitenden Schicht erzeugt wird, der seinerseits die Wirbelströme in der Ebene der aufzuheizenden Schicht erzeugt.

Bei der induktiven Energieeinkopplung, insbesondere beim diskontinuierlichen Verbinden von Schichten, ist es zudem möglich, die Schichten der herzustellenden Membran-Elektrodeneinheit in einer dichten Kunststoffschutzhülle zusammenzulegen und dann unter einer Presse zu erwärmen und zu fügen. Die Schutzhülle kann dabei gegebenenfalls mit Wasser oder Inertgas gefüllt sein, um den Fügeprozess entsprechend zu beeinflussen. Dies kann insbesondere bei empfindlichen Membranen vorteilhaft sein, die einen bestimmten Wassergehalt aufweisen, der auch während der Herstellung der Membran-Elektrodeneinheit möglichst nicht unterschritten werden sollte.

Im Fall der diskontinuierlichen Herstellung der Membran-Elektrodeneinheit über zwei Pressplatten sieht eine weitere Ausgestaltung der Erfindung vor, dass wenigstens eine der Pressplatten elektrisch kontaktiert ist. Die beiden Kontakte sollten dabei so angeordnet sein, dass ein möglichst homogener Stromfluss innerhalb der Elektronen leitenden Schicht erzeugt wird. Dazu sind die beiden Kontakte vorteilhaft als Linienkontakte an gegenüberliegenden Seiten der Schicht ausgeführt, die einen Stromfluss über die gesamte Breite der Schicht erlauben. Die kontaktierte Pressplatte selbst sollte nicht elektrisch leitend ausgebildet sein. Die Kontakte sollten durch die Pressplatte bis an die Oberfläche der Pressplatte geführt werden, so dass ein elektrischer Kontakt nur mit der aufzuheizenden Schicht zustande kommt.

Im Anschluss an den erfindungsgemäßen Aufheizschritt der Elektronen leitenden Schicht kann diese anschließend mit der Trägerschicht durch Aufbringen eines geeigneten Druckes zu den fertigen Komponenten, beispielsweise zu einer Membran-Elektrodeneinheit, fixiert bzw. gefügt werden. Da die Wärmeentwicklung erfindungsgemäß direkt in der zu verpressenden Schicht stattfindet, ist es vorteilhaft nicht mehr notwendig dafür beheizte Pressen oder Walzen zu verwenden.

Durch die erfindungsgemäße Widerstandsbeheizung der Elektronen leitenden Schicht ist es somit vorteilhaft möglich, in einem kontinuierlichen oder auch diskontinuierlichen Prozess diese nur lokal mit der Ionen leitenden Membran zu verschweißen. Ferner ist es denkbar, auf starre Pressplatten zu verzichten und den notwendigen Anpressdruck über ein Flüssigkeitsoder ein Gaspolster sehr homogen auf die zu fügenden Schichten zu übertragen.

Durch eine schnelle Erwärmung in wenigen Sekunden mit hohen Strömen ist es zudem möglich, die thermische Belastung des Ionomers deutlich zu vermindern, da nur jeweils die Elektronen leitende Schicht auf die zur Verbindung notwenige Temperatur erwärmt wird. Dadurch wird es zudem möglich, unterschiedliche Temperaturen für die Gasdiffusionsschichten, bzw. Gasdiffusionselektroden der Anode und der Kathode einzustellen.

Neben der bislang beschriebenen Herstellung einer Membran-Elektroden-Einheit (Membran-Elektrodeneinheit) mit einer Membran und einer Gasdiffusionsschicht, bzw. Gasdiffusionselektrodenschicht, ist das erfindungsgemäße Verfahren aber auch vorteilhaft für eine beidseitige Beschichtung einer Membran einsetzbar.

Dazu könnten bei einem kontinuierlichen Verfahren entsprechend elektrisch kontaktierte Walzen die entsprechend vorgeheizten Elektronen leitenden Schichten (DGL oder Gasdiffusionselektrode) beidseitig an die Membran heranführen und in einem einzigen Pressschritt geeignet verbunden werden. Da die Membran selbst nicht Elektronen leitend ausgestaltet ist, kann somit auch kein Kurzschluss zwischen den beiden nunmehr elektrisch kontaktierten Presswalzen entstehen.

Ähnliches gilt für die Herstellung einer beidseitig beschichteten Membran bei einer diskontinuierlichen Herstellungsweise. In diesem Fall könnte eine elektrische Kontaktierung beider Pressplatten vorgesehen sein.

Bei der Variante über eine induktive Stromeinkopplung könnten vorteilhaft beide Elektronen leitenden Schichten gleichzeitig über nur ein magnetisches Wechselfeld induktiv erwärmt werden.

Spezieller Beschreibungsteil

Nachfolgend wird die Erfindung anhand von Ausführungsbeispielen und drei Figuren näher erläutert.

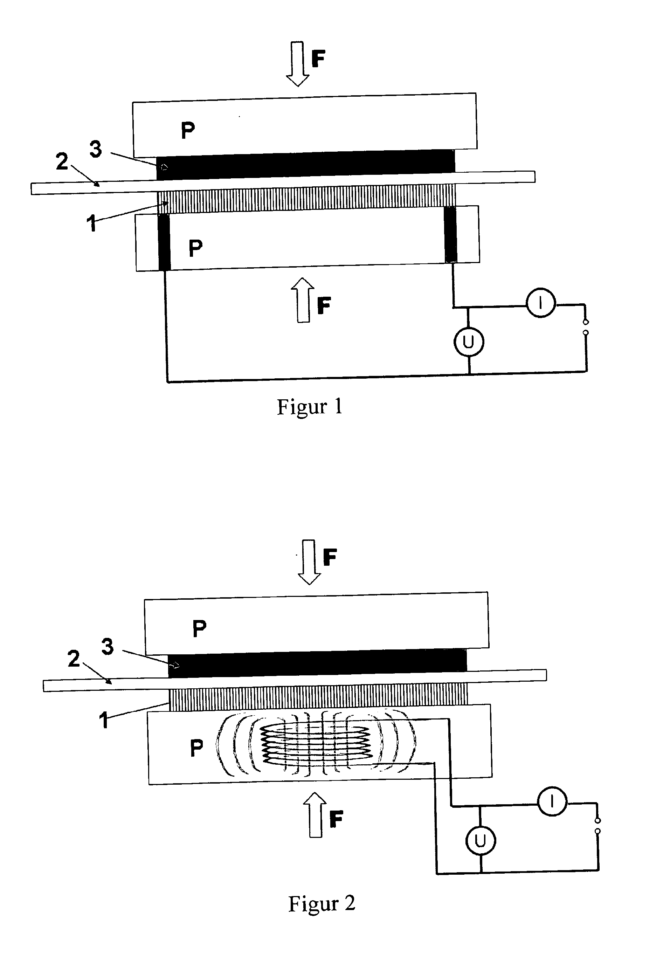

Die Figur 1 zeigt dabei schematisch die Anordnung einer diskontinuierlichen (batch-weisen) Ausführungsform der Herstellung einer Membran-Elektroden-Einheit. Die Membran-Elektroden-Einheit besteht dabei aus zwei Gasdiffusionsschichten (GDL) oder auch zwei kombinierten Gasdiffusionselektroden (GDE) (1 und 3), die an einer Polymerelektrolytmembran (2) anliegen. Der Schichtverbund ist zwischen zwei flächigen Pressplatten P angeordnet. Die in der Figur dargestellten Pfeile geben dabei die Richtung der Presskraft dieser Pressplatten an. Die elektrischen Kontakte der unteren Pressplatte sind derart angeordnet, dass innerhalb der kontaktierten GDL/GDE-Schicht (1) ein Stromfluss über die gesamte Breite stattfindet, der zur erfindungsgemäßen Erwärmung des Schichtverbundes führt. Das bedeutet, dass die Kontakte beispielsweise als Linienkontakte ausgeführt sind. Die Pressplatten selbst sind vorteilhaft nicht elektrisch leitend ausgestaltet, so dass die Stromeinkopplung ausschließlich über die elektrischen Kontakte realisiert wird.

Alternativ könnte in einer weiteren Ausgestaltung der Erfindung in der unteren Pressplatte eine Induktionsheizung angeordnet sein, die ein elektrisches Wechselfeld in der Schicht (1), und je nach Wahl der Parameter, auch in der Schicht (3) bewirken würde (siehe Figur 2).

Bei einer schnellen Erwärmung der Elektronen leitenden Schicht kann es auf diese Art aber auch möglich sein, im Verbund nur diese Schicht heiß mit der Membran zu verpressen ohne dass eine zweite, benachbart zur Membran angeordnete Gasdiffusionsschicht oder Gasdiffusionselektrodenschicht ebenfalls gefügt wird. Ein Wärmefluss durch die Pressplatten ist nicht mehr notwendig.

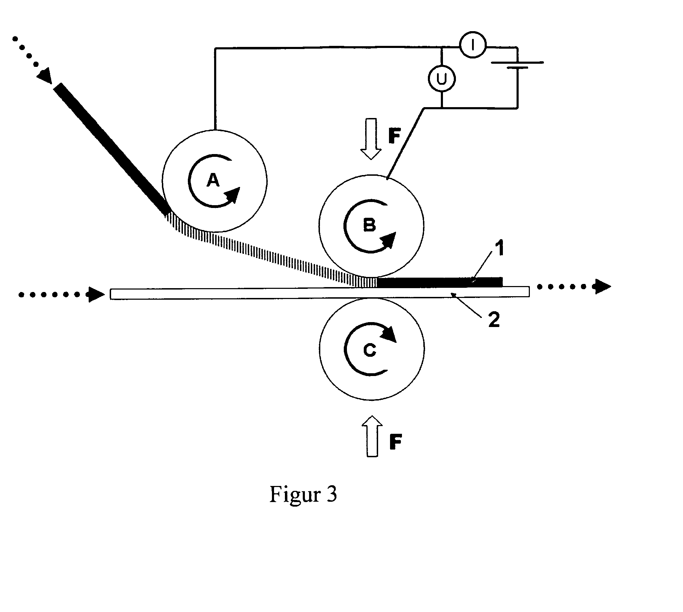

Im Fall der kontinuierlichen Herstellung einer Membran-Elektroden-Einheit, wie in der Figur 3 dargestellt, wird die kombinierte Gasdiffusionsschicht (GDL) oder Gasdiffusionselektrode (GDE) (1) üblicherweise über eine Walze (A) mit der ebenfalls über Walzen (B und C) geführten Polymerelektrolytmembran (2) zusammengeführt und auch gleichzeitig verpresst. Die in der Figur dargestellten Pfeile geben dabei die Richtung der Presskraft der gegenüberliegend angeordneten Walzen (B und C) an.

Bei der erfindungsgemäßen Ausführung der Erfindung gemäß Figur 3 werden zwei benachbarte Walzen derart elektrisch kontaktiert, dass in dem zwischen ihnen geführten Material ein Stromfluss erzeugt wird. Bei den beiden kontaktierten Walzen handelt es sich insbesondere um solche, die eine kombinierte GDL oder eine GDE-Schicht (1) führen, und zwar vorteilhaft, bevor sie mit der Polymerelektrolytmembran (2) zusammengeführt und verpresst wird. So liegt beim Kontakt der GDL bzw. GDE-Schicht (1) mit der Polymerelektrolytmembran (2) die GDL, bzw. GDE-Schicht bereits als entsprechend aufgeheizte Schicht vor, und kann beim Zusammenführen gleichzeitig auch schon verpresst werden.

In einer einfachen Ausführung könnten die Walzen an ihrer Oberfläche elektrisch kontaktiert werden. Dann würde sich für jede Walze eine lineare Kontaktierung mit der Elektronen leitenden Schicht ergeben, die somit einen homogenen Stromfluss entlang der Schicht in der gesamten Breite bewirken würde.

Beispielrechnung

Bei einer Breite b der zu verbindenden Gasdiffusions- bzw. Gasdiffusionselektroden-Schicht und der Ionen leitenden Membran von 0,5 m und einer Vorschubgeschwindigkeit der Maschine von ca. 0,1 m/s (6 m/min) ergibt sich bei einem Flächengewicht der Gasdiffusions- bzw. Gasdiffusionselektroden-Schicht von 0,1 kg/m$^2$ und einer Wärmekapazität von 0,709 kJ/(kg K), unter Vernachlässigung der Verluste nach unten stehender Formel, eine notwendige Heizleistung von ca. 0,41 kW, um einen Temperatursprung von 115 K zu erreichen.

$$b \cdot \vec{v} \cdot \rho_{substrat} \cdot c_{substrat} \cdot \Delta T + \dot{Q}_{verlust} = P_{el}$$

Unter diesen Randbedingungen liegt die notwendige Spannung bei einer Aufwärmstrecke von 0,1 m bei wenigstens 5,5 Volt, wobei sich ein Strom von 75 Ampere in der Elektronen leitenden Schicht der Gasdiffusions- bzw. Gasdiffusionselektroden-Schicht einstellt.

**Patentansprüche**

1. Verfahren zur Herstellung einer mehrschichtigen Elektrodeneinheit, bei dem eine Gasdiffusionsschicht oder eine Gasdiffusionselektrodenschicht auf einem Träger aufgebracht und heiß verpresst wird, **dadurch gekennzeichnet, dass** wenigstens eine leitfähige Gasdiffusionsschicht oder Gasdiffusionselektrodenschicht eingesetzt wird, und eine Erwärmung zumindest eines Bereiches dieser Schicht durch einen Stromfluss innerhalb der Schicht erfolgt.

2. Verfahren nach Anspruch 1, bei dem als Träger eine Polymerelektrolytmembran eingesetzt wird.

3. Verfahren nach einem der Ansprüche 1 bis 2, bei dem der Stromfluss über eine elektrische Kontaktierung erfolgt.

4. Verfahren nach einem der Ansprüche 1 bis 2, bei dem der Stromfluss induktiv eingekoppelt wird.

5. Verfahren nach Anspruch 1 bis 4, bei dem der Schritt der Erwärmung der Schicht vor dem Schritt des Verpressens erfolgt.

6. Verfahren nach einem der Ansprüche 1 bis 5, welches kontinuierlich durchgeführt wird.

7. Verfahren nach Anspruch 6, bei dem zum Verpressen sowohl eine Walze als auch eine Gegenwalze eingesetzt werden.

8. Verfahren nach einem der Ansprüche 6 bis 7, bei dem die Erwärmung der Schicht in einem Bereich der Schicht erfolgt, der noch nicht verpresst wurde.

9. Verfahren nach einem der Ansprüche 6 bis 8, bei dem die aufzubringende Schicht über eine weitere Transportwalze läuft, und die Erwärmung der Schicht über eine elektrische Kontaktierung der Transportwalze und einer der Walzen zum Verpressen erfolgt.

10. Verfahren nach einem der Ansprüche 1 bis 5, welches diskontinuierlich durchgeführt wird.

11. Verfahren nach Anspruch 10, bei dem zum Verpressen zwei Pressplatten eingesetzt werden.

12. Verfahren nach Anspruch 10, bei dem zum Verpressen wenigstens ein Presskissen eingesetzt wird.

13. Verfahren nach einem der Ansprüche 10 bis 12, bei dem die Erwärmung der Schicht durch eine elektrische Kontaktierung einer Pressplatte erfolgt.

14. Vorrichtung zur Herstellung einer mehrschichtigen Elektrode oder einer mehrschichtigen Elektrodenverbundeinheit, mit zwei Pressen zum diskontinuierlichen Verpressen der Schichten, **dadurch gekennzeichnet, dass** wenigstens eine Presse derart elektrisch kontaktiert ist, dass beim Anlegen einer Spannung an diese Kontakte diese Spannung in einer auf dieser Presse angeordneten Elektronen leitenden Schicht einen Stromfluss zu induzieren vermag.

15. Vorrichtung zur Herstellung einer mehrschichtigen Elektrode oder einer mehrschichtigen Elektrodenverbundeinheit, mit zwei Pressen zum diskontinuierlichen Verpressen der Schichten, **dadurch gekennzeichnet, dass** in wenigstens einer Presse eine Induktionsspule angeordnet ist, so dass beim Anlegen einer Spannung an diese Induktionsspule diese Spannung in einer auf dieser Presse angeordneten Elektronen leitenden Schicht einen Stromfluss zu induzieren vermag.

16. Vorrichtung zur kontinuierlichen Herstellung einer mehrschichtigen Elektrode oder einer mehrschichtigen Elektrodenverbundeinheit, mit wenigstens zwei Presswalzen zum kontinuierlichen Verpressen der Schichten, sowie wenigstens einer weiteren Transportwalze, über die eine Schicht zu den Presswalzen geführt wird,
**dadurch gekennzeichnet, dass** wenigstens eine der Presswalzen und die Transportwalze derart elektrisch kontaktiert sind, dass beim Anlegen einer Spannung an diese Kontakte diese Spannung in einer auf diesen Walzen geführten Elektronen leitenden Schicht einen Stromfluss zu induzieren vermag.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006008075 A
- DE 19757492
- DE 10112232 A1
- DE 10243046 B4